# EUROPÄISCHE PATENTANMELDUNG

(11) **EP 4 530 571 A1**
(43) Veröffentlichungstag der Anmeldung: **02.04.2025**
(21) Anmeldenummer: 23199970.7
(22) Anmeldetag: 27.09.2023
(51) Int. Cl.: G01B 11/06, B28B 1/00, G06T 7/00, G01B 11/00

(54) **COMPUTERGESTÜTZTES VERFAHREN ZUR VERMESSUNG EINER PRODUKTIONSPALETTE FÜR BETONFERTIGBAUTEILE UND/ODER EINER AUF DER PRODUKTIONSPALETTE ANGEORDNETEN KOMPONENTE**

(71) Anmelder: EBAWE Anlagentechnik GmbH, 04838 Eilenburg (DE)
(72) Erfinder: SCHELER, Marcus, 04838 Eilenburg (DE)
(74) Vertreter: Torggler & Hofmann Patentanwälte - Innsbruck

(57) **Zusammenfassung**

Computergestütztes Verfahren zur Vermessung einer Produktionspalette (2) für Betonfertigbauteile (1) für die Bauindustrie und/oder wenigstens einer auf der Produktionspalette angeordneten Komponente, vorzugsweise wenigstens eines Betonfertigbauteiles (1), bevorzugt Wandelement oder Deckenelement, wobei die folgenden Verfahrensschritte:
- die Produktionspalette (2) wird relativ zu wenigstens einer Messvorrichtung (3), vorzugsweise über ein Portal oder einen Kragarm, zum Scannen der Produktionspalette (2) bewegt,
- durch die wenigstens eine Messvorrichtung (3) wird wenigstens ein Tiefenbild in orthogonaler Richtung (4) auf die Produktionspalette (2) erstellt,
- eine Produktionspalettenhöhe und/oder eine Produktionshöhe (5) wenigstens einer auf der Produktionspalette (2) angeordneten Komponente orthogonal auf die Produktionspalette (2) wird durch eine Recheneinheit (18) über das wenigstens eine Tiefenbild an zumindest zwei räumlich voneinander beabstandeten Positionen (6, 7) der Produktionspalette (2) bestimmt.

## Beschreibung

Die Erfindung betrifft ein computergestütztes Verfahren zur Vermessung einer Produktionspalette für Betonfertigbauteile für die Bauindustrie und/oder wenigstens einer auf der Produktionspalette angeordneten Komponente, vorzugsweise wenigstens eines Betonfertigbauteiles, bevorzugt Wandelement oder Deckenelement. Des Weiteren betrifft die Erfindung ein Computerprogrammprodukt. Weiters betrifft die Erfindung eine Produktionsanlage umfassend eine Produktionspalette zur Herstellung wenigstens eines Betonfertigbauteiles für die Bauindustrie und wenigstens eine Messvorrichtung, wobei die Produktionspalette relativ zu der wenigstens einen Messvorrichtung zum Scannen wenigstens eines auf der Produktionspalette angeordneten Betonfertigbauteiles bewegbar ist.

Betonfertigbauteile für die Bauindustrie werden herkömmlicherweise in Produktionsstätten vorgefertigt und anschließend an die jeweilige Baustelle zur Montage transportiert. Dementsprechend ist es von signifikanter Bedeutung, Qualitätsmängel, Qualitätsschwankungen und/oder fertigungsbedingte Bauteiltoleranzen, welche insbesondere eine sachgemäße Montage erschweren und/oder ein optisches Erscheinungsbild der Betonfertigbauteile in Einbaulage mindern, möglichst zu unterbinden, da ansonsten aufwändige Nachbearbeitungen an den Betonfertigbauteilen vor Ort erforderlich sind. Insbesondere bei Doppelwandelemente ist eine exakte relative Positionierung zweier Betonfertigbauteile (der Ober- und Unterschale des Doppelwandelementes) essentiell. Erste Ansätze einer entsprechenden Qualitätskontrolle für derartige Betonfertigbauteile sind mit hohem Zeit- und Ressourcenaufwand verbunden, da Personal eine Produktionshöhe des Betonfertigbauteils an einer diskreten Anzahl an Positionen des Betonfertigbauteiles manuell messen und anschließend anhand der händisch erfassten Messpunkte auf etwaige Nachkorrekturen rückschließen muss. Darüber hinaus muss sich das Personal darauf verlassen, dass die Produktionspalette in einem sachgemäßen Zustand für die Fertigung der Betonfertigbauteile befindet.

Die objektive technische Aufgabe der vorliegenden Erfindung besteht daher darin, ein gegenüber dem Stand der Technik verbessertes Verfahren zur Vermessung von Produktionspaletten und/oder auf der Produktionspalette angeordneten Komponenten sowie ein Computerprogrammprodukt und eine Produktionsanlage anzugeben, bei welchen die Nachteile des Stands der Technik zumindest teilweise behoben sind, und welche sich insbesondere durch einen effizienten und präzisen Prozess zur Qualitätssicherung auszeichnen.

Diese Aufgabe wird durch die Merkmale des Anspruches 1 gelöst.

Es ist demnach erfindungsgemäß vorgesehen, dass die folgenden Verfahrensschritte durchgeführt werden:
- das wenigstens eine Betonfertigbauteil wird auf der Produktionspalette angeordnet,
- die Produktionspalette wird relativ zu wenigstens einer Messvorrichtung, vorzugsweise über ein Portal oder einen Kragarm, zum Scannen des wenigstens einen Betonfertigbauteiles bewegt,
- durch die wenigstens eine Messvorrichtung wird wenigstens ein Tiefenbild in orthogonaler Richtung auf die Produktionspalette erstellt,
- eine Produktionspalettenhöhe und/oder eine Produktionshöhe des wenigstens einen Betonfertigbauteiles orthogonal auf die Produktionspalette wird durch eine Recheneinheit über das wenigstens eine Tiefenbild an zumindest zwei räumlich voneinander beabstandeten Positionen der Produktionspalette bestimmt.

Dadurch wird es erst ermöglicht, dass einem Bediener einer Produktionsanlage für Betonfertigbauteile schnell und komfortabel ein Überblick über die vorliegenden Bauteiltoleranzen sowie etwaige noch zu korrigierende Geometrieabweichungen der Betonfertigbauteile bereitgestellt werden können. Beispielsweise kann ein optisches oder akustisches Signal dem Bediener auf Basis der ermittelten Produktionshöhen (gegebenenfalls aufgrund der vorliegenden Beabstandungen von Betonfertigbauteilen zueinander) vermitteln, dass hinreichende Qualitätsstandards an die Form der Betonfertigbauteile vorliegen. Im Fall von abweichenden Produktionshöhen einzelner Betonfertigbauteile kann zum Beispiel über ein HMI (Human-Machine-Inferface) oder einen Computer ein Plan für Positionsänderungen oder - im Fall von bereits ausgehärtetem Beton - Schleifarbeiten an konkreten Positionen des jeweiligen Betonfertigbauteiles visualisiert werden.

Die Erfindung ist jedoch nicht auf die Analyse von Betonfertigbauteile beschränkt. Beispielsweise kann lediglich die Produktionspalette in der vorliegenden Geometrie oder die Positionierung zumindest eines Abstandhalters und/oder einer Bewehrung und/oder eines Schalungselementes als auf der Produktionspalette angeordnete Komponente(n) vor und/oder nach einem Anordnen von Beton auf der Produktionspalette analysiert beziehungsweise begutachtet werden, um beispielsweise aufgrund einer unsachgemäßen Positionierung und/oder Verunreinigungen und/oder Abnützungen frühzeitig auf den Produktionsprozess einwirken zu können. Bevorzugt wird das Betonfertigbauteil - als Endprodukt oder gegebenenfalls während des Herstellungsprozesses (zum Beispiel anhand von Teilen des Betonfertigbauteiles) - analysiert beziehungsweise begutachtet.

Darüber hinaus kann die wenigstens eine Messvorrichtung und/oder die Recheneinheit zur Analyse der über die wenigstens eine Messvorrichtung generierten Tiefenbilder als Add-on oder Plug-in für bestehende Produktionsanlagen zur Nachrüstung benutzerfreundlich genutzt werden. Im Allgemeinen ist beliebig, ob die Produktionspalette und/oder die wenigstens eine Messvorrichtung bewegt wird.

Weiters kann ein Abnützungsgrad und/oder eine vorliegende Geometrie und/oder Verunreinigungen der Produktionspalette erfasst werden. Dadurch kann beispielsweise eine Produktionspalette ausgesondert oder nachbearbeitet werden, wenn diese nicht eine hinreichende Ebenheit aufweist.

Des Weiteren kann die wenigstens eine Messvorrichtung mit den dadurch akquirierten Daten über ein spezifisches Messprinzip von der Software zur Bearbeitung und Auswertung der Informationen der Messsignale entkoppelt werden, sodass Adaptionen sowohl an der wenigstens einen Messvorrichtung als auch der Software - insbesondere bei geänderten Anforderungen an die Analyse der Betonfertigbauteile - einfach bewerkstelligbar ist.

Da die Produktionshöhe als vertikale Beabstandung (in z-Richtung) einer Oberseite des Betonfertigbauteiles relativ zu einem Referenzpunkt (im Allgemeinen der Unterseite des Betonfertigbauteiles in der Produktionspalettenebene als Referenzebene) an zumindest zwei Punkten (im Allgemeinen eines im Wesentlichen entsprechend der Messgenauigkeit vorliegenden über das Betonfertigbauteil verteilten Kontinuums an Messpunkten) in der orthogonal dazu orientierten x-y-Ebene erfasst werden kann, kann über eine vorliegende Dicke des Betonfertigbauteiles oder einer Lage dessen auch eine Ebenheit des Betonfertigbauteiles (beziehungsweise der Produktionspalette) abgeleitet werden. Eine Messung von relativen Lagen in der x-y-Ebene ist im Allgemeinen nicht erforderlich.

Der Fachterminus Tiefenbild kann auch als Tiefenkarte bezeichnet werden, wobei dem Tiefenbild 3D-Informationen zu entnehmen sind, mit welchen auf eine Höhe der abzubildenden Gegenstände rückgeschlossen werden kann.

Die Produktionshöhe ist lediglich ein bevorzugter Qualitätsparameter für Betonfertigbauteile, dessen Überschreitung von Schwellwerten zu Sollwerten eine Nachbearbeitung der Betonfertigbauteile - bevorzugt während des Produktionsprozesses bei flüssigem oder zumindest nicht vollständig ausgehärtetem Beton - bedingen kann. Weitere Qualitätsparameter können beispielsweise Winkel, Ebenheit, Konturvorgaben an die Geometrie, et cetera darstellen, wobei beispielsweise ein Winkel einer Außenkontur durch zumindest zwei Produktionshöhen des Betonfertigbauteiles ableitbar ist. Extrapolationen zu abgeleiteten Größen wie eine Ebenheit des Betonfertigbauteiles sind bevorzugt, welche trotz gegebenenfalls vorliegender Komplexität in der Berechnung rasch erkennbar sind, um etwaige Handlungsempfehlungen an ein Personal zur Fehlerkorrektur oder einer automatisierten Nachbearbeitung durch eine Bearbeitungseinrichtung der Produktionsanlage am Betonfertigbauteil ausgeben zu können.

Durch die Bereitstellung von Höheninformationen des Betonfertigbauteiles während oder kurz nach dem Produktionsprozess kann noch vor dem Aushärten des Betons durch Verschiebung, Eindrücken oder Herausziehen einer Bewehrung oder einer Hälfte eines Doppelwandteiles auf die Geometrie des Endproduktes eingewirkt werden, ohne dass aufwändige Nachbearbeitungsschritte wie Schleifarbeiten erforderlich sind. Insbesondere bei Doppelwandteilen, welche im Gebrauchszustand zumindest zwei Sichtflächen aufweisen, ist eine sachgemäße Form von hoher Bedeutung.

Hinzu kommt die positive Eigenschaft, dass über das wenigstens eine Tiefenbild Ressourcen in der Produktion der Betonfertigbauteile eingespart werden können, da auf ein verarbeitetes Volumen an Beton rückgeschlossen werden kann und/oder Informationen zu Abweichungen zu einer erforderlichen Mindestproduktionshöhe des Betonfertigbauteiles vorliegen. Eine zu verarbeitende Betonmenge kann somit effizient auf ein minimal nötiges Maß adjustiert werden.

Durch das Verfahren sind insbesondere die Ausrichtung und/oder Höhe einer Bewehrung und/oder von weiteren Bauteilkomponenten wie Abstandhaltern ermittelbar. Dies bedingt den Vorteil, dass beispielsweise Kollisionen beim Einwenden einer Doppelwandhälfte durch frühzeitige Korrektur der Lage unterbunden werden können und auch präventiv auf eine ungewünschte Geometrie des Betonfertigbauteiles eingewirkt werden kann, indem beispielsweise die Position der Bewehrung (in der Position in der Produktionspalettenebene oder in der Höhe) geändert wird. Über das wenigstens eine Tiefenbild kann somit sowohl vor als auch nach einem Betonierprozessschritt eine Anpassung in der Produktion erfolgen.

Zum Beispiel kann eine Doppelwandhälfte vor dem Einwenden der zweiten Doppelwandhälfte - gegebenenfalls vor dem Einbringen von Beton und nach dem Einbringen von Beton - analysiert werden und/oder das Doppelwandelement nach dem Einwenden analysiert werden.

Darüber hinaus ist denkbar, einen mechanischen und/oder thermischen Stress durch die Höheninformationen der Betonfertigbauteilen abzuleiten und gegebenenfalls in den Produktionsprozess einzugreifen. Beispielsweise kann der mechanische Stress durch eine Verschiebung von abstandssichernden Komponenten hervorgerufen werden.

Sowohl die Tiefenbilder als auch die Auswertungen der Tiefenbilder sind speicherbar und beispielsweise als Historie für Extrapolationen oder eine künstliche Intelligenz nutzbar. Dadurch kann ein Produktionsprozess verbessert werden und der relevante Informationsgehalt kann gefiltert und einem Benutzer des Systems auf einem Blick dargestellt werden.

Bei Betonfertigbauteilen in Form von Doppelwandelementen ist ein wichtiger Qualitätsparameter die Beabstandung der enthaltenen Betonfertigbauteilteile, vorzugsweise über das Doppelwandelement hinweg, welcher sich in der Produktionshöhe des Doppelwandelementes nach dem Einwenden der Oberschale in die Unterschale manifestiert, wobei die Produktionshöhe derart breit auszulegen ist, dass auch die Beabstandung oder die Produktionshöhe einer Schale als Dicke - gegebenenfalls zusammen mit einer herausragenden Bewehrung - oder Teile des Betonfertibauteiles durch die Produktionshöhe umfasst ist.

Die Beabstandung kann beispielsweise über eine Differenz der Produktionshöhe eines Doppelwandelements und den Produktionshöhen der enthaltenen Betonfertigbauteile als Produktionshöhe der Bewehrung zwischen den Betonfertigbauteilen als Teil des Betonfertigbauteiles errechnet werden. Die Produktionshöhe ist nicht beschränkt auf Außenabmessungen des Betonfertigbauteiles.

Hinzu kommt die positive Eigenschaft, dass die wenigstens eine Messvorrichtung einfach an gegebene Anforderung adaptierbar und hinsichtlich der abzubildenden Dimensionen skalierbar ist. Auch die Software zur Auswertung der Tiefenbilder ist flexibel in Bezug auf die gewünschte Funktionalität adjustierbar.

Das wenigstens eine Betonfertigbauteil kann im Allgemeinem im ausgehärteten Zustand des enthaltenen Betons oder in einem Zustand vor der Aushärtung, vorzugsweise mit flüssigem oder noch weichem Beton, vorliegen.

Wie eingangs ausgeführt, wird Schutz auch begehrt für ein Computerprogrammprodukt umfassend Befehle, die bei einer Ausführung durch eine Recheneinheit diese veranlassen, durch wenigstens eine Messvorrichtung wenigstens eine Tiefenbild in orthogonaler Richtung auf eine Produktionspalette zu erstellen und eine Produktionspalettenhöhe und/oder eine Produktionshöhe wenigstens einer auf der Produktionspalette angeordneten Komponente, vorzugsweise Betonfertigbauteil, orthogonal auf die Produktionspalette über das wenigstens eine Tiefenbild zu bestimmen.

Wurden von der wenigstens einen Messvorrichtung - beispielsweise über einen Laser und einer Kamera - Tiefenbilder aufgenommen, so kann das Computerprogrammprodukt als Software die Tiefenbilder (z.B. als Distanzpunkte entlang einer Breite der Produktionspalette) zu einem Gesamttiefenbild zusammenfügen, um Rückschlüsse auf die vorliegende Geometrie des Betonfertigbauteiles zu ermöglichen. Hierbei können Produktionsdaten integriert werden, um Abweichungen (z.B. der Produktionshöhen) zu Sollwerten ermitteln zu können. Die Produktionsdaten können genutzt werden, um Such- und Rekonstruktionsaufträge innerhalb der Bilddatenebene der Tiefenbilder abzuleiten. Durch geeignete Vorbearbeitung der Tiefenbilder - beispielsweise morphologische Transformation und/oder Bandpassfilterung) können die Tiefenbilder so aufbereitet werden, dass die Kanten der Produktionspalette, von Schalungen und/oder Elementen vermessen und/oder rekonstruiert werden.

Beispielsweise kann in einem ersten Schritt die Produktionspalette als Objekt rekonstruiert werden, in dem Kanten der Produktionspaletten gemessen und als Polygonpunkte gespeichert werden. Die Kante kann zum Beispiel über einen Convolution Kernel detektiert werden, um die Messpunkte mittels statistischer Rekonstruktionsmethoden als 3D-Linie zu fitten. Ein Produktionspaletten-Nullpunkt kann als Referenzpunkt aus den Messinformationen der Tiefenbilder transformiert oder festgelegt werden.

Die Messpunkte der wenigstens einen Messvorrichtung können auf bandpassgefilterten Bilddaten - z.B. je nach Suchanfrage auf der Unterschale oder Oberschale des Doppelwandelements - durchgeführt werden, wobei die Unterschale als Betonfertigbauteil des Doppelwandelementes indirekt über die Messung der Schalungselemente rekonstruiert werden kann.

Die rekonstruierten Kanten auf der Produktionspalette können als 3D-Linien dargestellt werden und Polygonpunkte können abgeleitet werden. Um eine präzise Höhen- und/oder Lageinformation der Betonfertigbauteile und/oder Bereichen hiervon zueinander berechnen zu können, kann beispielsweise die Oberfläche der Oberschale und der Produktionspalette mit randomisierten Punkten vermessen werden und zu einer Korrekturoberfläche gefittet werden, welche anschließend zur Korrektur der Höheninformation genutzt werden kann, um die relativen Positionen der Unterschale zu Oberschale im Wesentlichen ohne systematischen Lagefehler in Bezug auf die Produktionspalette bei der relativen Bewegung zu der wenigstens einen Messvorrichtung ermitteln zu können.

Aus den generierten Daten zu Ist- und Sollpunkten kann eine Lagepositionskorrekturerkennung angewandt werden, welche alle sechs Freiheitsgrade (x, y, z, Roll, Pitch, Yaw) als qualitätssichernde Merkmale bestimmt, welche mit einem Systemvorgaberichtwert abgeglichen werden kann und/oder eine Korrektur- beziehungsweise Handlungsempfehlung generiert werden kann.

In der Software in Form der Applikation als Computerprogrammprodukt kann eine Verletzung eines Qualitätsmerkmals - beispielsweise eine zu hohe Produktionshöhe des Betonfertigbauteiles oder ein nicht hinreichend planes Doppelwandelement - als Fehlermeldung oder Korrekturempfehlen ausgegeben werden, um beispielsweise Personal auf Handlungssempfehlungen auf einer Anzeigevorrichtung der Produktionsanlage hinzuweisen.

Der Algorithmus beziehungsweise die Logik zur Auswertung der Tiefenbilder der wenigstens einen Messvorrichtung kann als Layer-Modell ausgeführt sein und ist nicht auf spezifische Datengrößen oder Metriken beschränkt. Unterschiedliche Auflösungsqualitäten und/oder Bildgrößen sind abdeckbar, wobei das Computerprogrammprodukt von einer Steuerungs- und/oder Regelungseinrichtung zur Erstellung der Tiefenbilder über die wenigstens eine Messvorrichtung unabhängig ausgebildet sein kann. Das Computerprogrammprodukt kann Cloud-basiert ausgestaltet sein, wobei eine Vielzahl an Qualitätssicherungsprozesse für Betonfertigbauteile parallel abgearbeitet werden können (vorzugsweise über selbige Vision-Server-Logik).

Eine Suchinformations- und/oder Transformationsalgorithmik kann in Abhängigkeit der Produktionsdaten gewählt werden.

Eine Rekonstruktionsalgorithmik und/oder 3D-Korrektur von Kanten oder Flächen des Betonfertigbauteiles (z.B. der Ober- und/oder Unterschale des Doppelwandelementes) ist bevorzugt.

Besonders bevorzugt wird eine Korrekturabteilungslogik für Korrekturhandlungsempfehlungen verwendet.

Wie eingangs ausgeführt, wird Schutz auch begehrt für eine Produktionsanlage umfassend eine Produktionspalette zur Herstellung wenigstens eines Betonfertigbauteiles für die Bauindustrie und wenigstens eine Messvorrichtung, wobei die Produktionspalette relativ zu der wenigstens einen Messvorrichtung zum Scannen der Produktionspalette und/oder wenigstens einer auf der Produktionspalette angeordneten Komponente, vorzugsweise Betonfertigbauteil, bewegbar ist, wobei die wenigstens eine Messvorrichtung dazu ausgebildet ist, wenigstens ein Tiefenbild der Produktionspalette und/oder wenigstens einer auf der Produktionspalette angeordneten Komponente, vorzugsweise Betonfertigbauteil, in orthogonaler Richtung auf die Produktionspalette an zumindest zwei räumlich voneinander beabstandeten Positionen zu erstellen und die Produktionsanlage eine Recheneinheit umfasst, welche dazu eingerichtet ist, eine Produktionspalettenhöhe und/oder eine Produktionshöhe wenigstens einer auf der Produktionspalette angeordneten Komponente, vorzugsweise Betonfertigbauteil, in Abhängigkeit des wenigstens einen Tiefenbildes zu bestimmen.

Die Recheneinheit kann als Schnittstelle zwischen der wenigstens einen Messvorrichtung und einer Visualisierungsvorrichtung zur Vermittlung von Handlungsempfehlungen zur Korrektur des wenigstens einen Betonfertigbauteiles (oder Anzeige, dass eine hinreichende Qualität ohne Nachbearbeitung vorliegt) in der Doppelfunktion der Aufbereitung der Tiefenbilder sowie Verarbeitung des in den Tiefenbildern enthaltenen Informationsgehaltes betrachtet werden.

Vorteilhafte Ausführungsformen der Erfindung sind in den abhängigen Ansprüchen definiert.

Gemäß einer vorteilhaften Ausführungsform der Erfindung ist vorgesehen, dass das wenigstens eine Tiefenbild über Lasertriangulation wenigstens einer Lasertriangulationseinheit der wenigstens einen Messvorrichtung ermittelt wird, wobei das wenigstens eine Tiefenbild durch wenigstens eine Kamera, vorzugsweise FGPA-Kamera, der wenigstens einen Messvorrichtung erfasst wird.

Eine FGPA-Kamera kann im Sinne eines Pseudo-Zeilen-Scanners Daten für die weitere algorithmische Verarbeitung bereitstellen, um die Höheninformation - aufgelöst über die Breite der Produktionspalette - zu ermitteln, welche der jeweiligen Koordinate entlang der Produktionspalette zugeordnet wird.

Bevorzugt ist die wenigstens eine Kamera relativ zur über die wenigstens einen Lasertriangulationseinheit Abbildungsebene schräg angeordnet. Besonders bevorzugt wird eine Vielzahl an Kameras zur Bildung eines Active-Stereo-Vision-Systems genutzt.

Im Allgemeinen löst die wenigstens eine Messvorrichtung in Produktionspaletten-Bewegungsrichtung x und orthogonal dazu in y mit 1 mm pro Pixel auf, wobei eine maximale Produktionspaletten-Bewegungsgeschwindigkeit von 0,5 m/s vorliegen kann. Die Auflösung in x und y sowie die Auflösung der Messhöhe in z sind unabhängig voneinander kalibrierbar. Die Auflösung in z kann sich auf einer Kameraposition, der Kameraauflösung und/oder der maximal kalibrierten Höhe ergeben. Eine gröbere Auflösung in x-y-Richtung ermöglicht eine höhere Produktionspaletten-Bewegungsgeschwindigkeit und vice versa.

Mittels dem Messprinzip der Lasertriangulation können ohne komplexe Apparaturen und hohe Systemanforderungen besonders günstig Distanzen zwischen Kanten des wenigstens einen Betonfertigbauteiles und der Produktionspalette in vertikaler Richtung erfasst werden, um effizient Rückschlüsse auf die vorliegende Form des wenigstens einen Betonfertigbauteiles im Zuge des Fertigungsprozesses zu ermöglichen.

Vorteilhafter Weise ist vorgesehen, dass eine Vielzahl an Lasertriangulationseinheiten und/oder Kameras in Reihe orthogonal zu der Bewegungsrichtung der wenigstens einen Messvorrichtung an der wenigstens einen Messvorrichtung angeordnet ist.

Dadurch können breite Betonfertigbauteile im Zuge einer einzigen translatorischen Bewegung der wenigstens einen Messvorrichtung in der gesamten Breite abgebildet werden.

Bevorzugt ist vorgesehen, dass die wenigstens eine Messvorrichtung dazu ausgelegt ist, Produktionshöhen des wenigstens einen Betonfertigbauteiles zwischen 10 mm und 600 mm zu bestimmen, wobei die Produktionshöhe des wenigstens einen Betonfertigbauteiles zwischen 10 mm und 600 mm bestimmt wird.

Beispielsweise weist ein Doppelwandelement eine Produktionshöhe von 500 mm auf, wobei gegebenenfalls eine Beabstandung der beiden Betonfertigbauteile von 200 mm als Produktionshöhe des Betonfertigbauteiles über Tiefenbilder im Randbereich und im Zentrum des Doppelwandelementes bestimmt wird. Zum Beispiel können Ergebniswerte bei 500 mm Produktionshöhe in Abhängigkeit eines Qualitätsmangels im Bereich von 1 bis 3 % schwanken, sodass beispielsweise an einer Ecke des Betonfertigbauteiles eine Produktionshöhe von 505,2 mm und an einer anderen Ecke von 499,2 mm gemessen wird. Eine absolute, maximale Abweichung zu einem Erwartungswert von 500 mm (in dem dargelegten Fall von 5,2 mm) und/oder eine relative Abweichung über die gemessenen Punkte (in dem dargelegten Fall von 6 mm) kann mit einem Schwellwert abgeglichen werden, um gegebenenfalls bei Überschreitung eine Nachbearbeitung anzuzeigen.

Eine Höhenauflösung von 2,5 mm kann bei einer Messhöhe von 600 mm generiert werden. In Abhängigkeit einer Kalibrierung auf eine bestimmte Messhöhe und gegebenenfals durch Anpassung einer Kameraposition kann die Höhenauflösung, vorzugsweise auf etwa 1 mm, besonders bevorzugt in den pm-Bereich, gesteigert werden.

Gemäß einer vorteilhaften Ausführungsform der Erfindung ist vorgesehen, dass zumindest zwei Betonfertigbauteile zu einem Doppelwandelement, vorzugsweise mit wenigstens einer zwischen den zumindest zwei Betonfertigbauteilen angeordneten Bewehrung und/oder über eine Wendevorrichtung zum Einwenden, verbunden werden.

Als vorteilhaft hat sich erwiesen, dass eine Beabstandung der beiden Betonfertigbauteile zueinander als Produktionshöhe an zumindest zwei voneinander räumlich beabstandeten Positionen des Doppelwandelementes bestimmt wird.

Es ist jedoch hinreichend, die Gesamtdicke des Betonfertigbauteiles als Produktionshöhe zu bestimmen, um daraus Abweichungen zu einem Sollgeometrieparameter abzuleiten. Bei mehrteiligen Produktionsprozessen, wie Doppelwandelementen, kann beispielsweise zunächst eine Produktionshöhe der Unterschale als Betonfertigbauteil - gegebenenfalls unter Berücksichtigung der Bewehrung - und anschließend des Doppelwandelementes als Betonfertigbauteil bestimmt werden. Dadurch kann zum Beispiel die Oberschale des Doppelwandelementes derart in die Unterschale eingesetzt werden, dass keine Nachbearbeitungsschritte erforderlich sind, da beispielsweise keine Kollision mit Komponenten der Unterschale erfolgt (grundsätzlich ist auch denkbar, dem Einwendeprozess die Daten der analysierten Unterschale zugrunde zu legen, um ein besonders günstiges Einwenden der Oberschale durchzuführen).

Eine vorteilhafte Variante der vorliegenden Erfindung besteht darin, dass das wenigstens eine Tiefenbild, vorzugsweise mit der Produktionspalette als Referenzebene, während eines Aushärtevorgangs von Beton des wenigstens einen Betonfertigbauteiles erstellt und ausgewertet wird.

Dadurch kann gewährleistet werden, dass eine gegebenenfalls erforderliche Nachbearbeitung des wenigstens einen Betonfertigbauteiles noch vor einem vollständigen Aushärten des Betons des wenigstens einen Betonfertigbauteiles bewerkstelligt werden kann, wodurch die Nachbehandlung des wenigstens einen zu bearbeitenden Betonfertigbauteiles erleichtert wird.

Besonders bevorzugt ist, dass das wenigstens eine Tiefenbild als 8-Bit-Tiefenbild erstellt und/oder aus einer Punktwolke, vorzugsweise erzeugt mittels 3D-Stereo-Vision oder Structured Light, abgeleitet wird.

Dadurch kann ein Mindeststandard sichergestellt werden, dass ein hinreichender Informationsgehalt in den erfassten Daten enthalten ist, um eine Distanz einer Kante relativ zu einer weiteren Kante ermitteln zu können. Höhere Auflösungen und/oder Bildqualitäten sind möglich, jedoch nicht zwingend erforderlich.

Eine optische Tiefenanalyse oder eine CT-Technik ist im Allgemeinen alternativ oder in Ergänzung möglich.

Bei einem Ausführungsbeispiel der Erfindung ist vorgesehen, dass das wenigstens eine Tiefenbild und wenigstens ein Produktionsparameter, vorzugsweise Schalungsparameter, einer Bilddatenverarbeitungslogik zugeführt werden, wobei das wenigstens eine Tiefenbild durch einen Algorithmus über den wenigstens einen Produktionsparameter rekonstruiert wird, wobei vorzugsweise vorgesehen ist, dass das wenigstens eine Tiefenbild mittels morphologischer Transformation und/oder Bandpassfilterung aufbereitet wird.

Durch den wenigstens einen Produktionsparameter kann sichergestellt werden, dass die ermittelten Ist-Werte des wenigstens einen Betonfertigbauteiles mit den korrekten Soll-Werten gemäß dem Herstellungsauftrag automatisiert abgeglichen werden.

Die Signalverarbeitung der Daten aus der wenigstens einen Messvorrichtungen wird besonders bevorzugt in einer Logik durchgeführt, welche eine Erkennung der Kanten der Produktionspalette und/oder des Betonfertigbauteiles und/oder eine Rekonstruktion der Kanten und/oder Höhen relativ zu der Produktionspalette umfasst, um einen Soll-Ist-Vergleich zwischen den tatsächlich vorliegenden Produktionshöhen und einem konkreten Sollwert für die Höhe oder einem Schwellwertbereich um den konkreten Sollwert für die Höhe generieren zu können.

Gemäß einem bevorzugten Ausführungsbeispiel der Erfindung ist vorgesehen, dass über einen Algorithmus zur Korrekturerkennung des wenigstens einen Betonfertigbauteiles eine Abweichung der Produktionshöhe des wenigstens einen Betonfertigbauteiles und/oder einer gegebenenfalls vorhandenen Beabstandung zweier Betonfertigbauteile zu einem Sollwert, vorzugsweise auf Basis des wenigstens einen gegebenenfalls zugeführten Produktionsparameter, bestimmt wird, wobei durch den Algorithmus eine Korrekturempfehlung zur Nachbearbeitung des wenigstens einen Betonfertigbauteils in Abhängigkeit der bestimmten Abweichung erstellt wird.

Dadurch kann automatisiert ein Plan als Handlungsempfehlung für den Bediener der Produktionsanlage erstellt werden, auf Basis welcher die Nachbearbeitung erfolgen soll. An Stelle des Bedieners kann beispielsweise ein Roboter automatisch für die automatisierte Nachbearbeitung instruiert werden.

Als günstig hat sich erwiesen, dass eine Abweichung von Abmaßen des wenigstens einen Betonfertigbauteiles zu Sollwerten in zumindest drei Freiheitsgraden, vorzugsweise sechs Freiheitsgraden, bestimmt wird.

Im Allgemeinen ist in Ergänzung zu einer Produktionshöhe des wenigstens einen Betonfertigbauteiles beziehungsweise einer Beabstandung von Betonfertigbauteilen auch eine Begutachtung weiterer formgebundenen Aspekte des wenigstens einen Betonfertigbauteiles zur Qualitätssicherung bevorzugt, welche durch eine Aufnahme von Ist-Werten des wenigstens einen Betonfertigbauteiles über das wenigstens eine Tiefenbild erfasst in einer Vielzahl an Freiheitsgraden werden kann, um beispielsweise eine Schräglage einer Oberfläche oder einer Verwringung des wenigstens einen Betonfertigbauteiles abbilden und beheben zu können.

Weiters ist bevorzugt vorgesehen, dass das wenigstens eine Betonfertigbauteil in Abhängigkeit der Korrekturempfehlung nachbearbeitet wird.

In einer Ausführungsform des Computerprogrammprodukts kann vorgesehen sein, dass in Abhängigkeit wenigstens eines dem Computerprogrammprodukt zugeführtem Produktionsparameter
- das wenigstens eine Tiefenbild rekonstruiert wird und/oder
- eine Abweichung der Produktionshöhe zu einem Sollwert bestimmt wird und/oder
- eine Korrekturempfehlung zur Nachbearbeitung des wenigstens einen Betonfertigbauteiles erstellt wird.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Produktionsanlage gemäß einem bevorzugten Ausführungsbeispiel zur Durchführung eines erfindungsgemäßen Verfahrens in einer schematischen perspektivischen Darstellung,
- Fig. 2: eine Wendevorrichtung gemäß einer ersten Ausführungsform mit einer Produktionspalette, an welchem ein Betonfertigbauteil für die Fertigung eines Doppelwandelementes angeordnet ist, in einer perspektivischen Ansicht,
- Fig. 3: eine Wendevorrichtung gemäß einer zweiten Ausführungsform während eines Einwendens eines Betonfertigbauteils in ein zweites Betonfertigbauteil zur Bildung eines Betonfertigbauteils in Form eines Doppelwandelementes,
- Fig. 4: eine Produktionspalette mit drei Betonfertigbauteilen, angeordnet auf einer Wendevorrichtung, in einer Draufsicht,
- Fig. 5: eine Produktionsanlage gemäß einem weiteren bevorzugten Ausführungsbeispiel zur Durchführung eines erfindungsgemäßen Verfahrens in einer schematischen perspektivischen Darstellung,
- Fig. 6a-6c: analysierte Tiefenbilder von auf einer Produktionspalette angeordneten Betonfertigbauteilen mit einer Handlungsempfehlung zur Nachbearbeitung von Betonfertigbauteilen,
- Fig. 7a, 7b: Intensitätsbilder von auf einer Produktionspalette angeordneten Betonfertigbauteilen zur Verarbeitung durch eine Recheneinheit,
- Fig. 7c,7d: Tiefenbilder der auf der Produktionspalette angeordneten Betonfertigbauteile zur Verarbeitung durch die Recheneinheit.

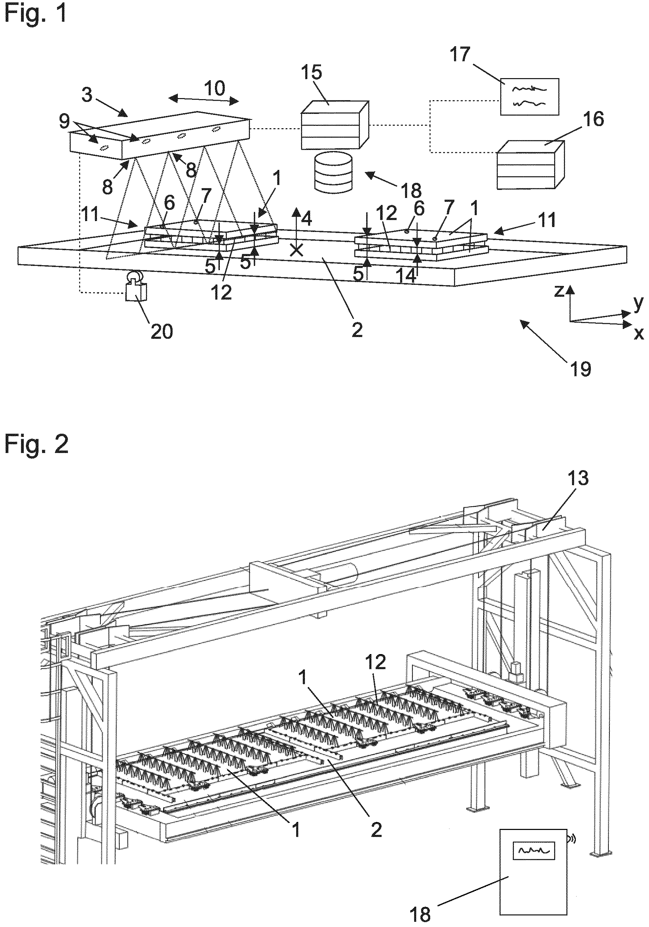

Fig. 1 zeigt eine Produktionsanlage 19 umfassend eine Produktionspalette 2 zur Herstellung von Betonfertigbauteilen 1 für die Bauindustrie mit zwei darauf angeordneten Betonfertigbauteilen 1 in Form von Doppelwandelementen 11, welche jeweils aus zwei Betonfertigbauteilen 1 zusammengesetzt sind. Die beiden Betonfertigbauteile 1 des Doppelwandelements 1 sind über eine Bewehrung 12 miteinander verbunden.

Die Produktionsanlage 19 weist eine Messvorrichtung 3 auf, welche relativ zu der Produktionspalette 2 zum Scannen der auf der Produktionspalette 2 angeordneten Betonfertigbauteile 1 bewegbar ist.

Die Messvorrichtung 3 umfasst eine Vielzahl an Lasertriangulationseinheiten 8 und Kameras 9 in Reihe orthogonal zu der Bewegungsrichtung 10 der Messvorrichtung 3. In der dargestellten Ausführungsform der Produktionsanlage 19 sind vier Lasertriangulationseinheiten 8 jeweils mit einer Kamera 9 ausgestattet und derart an der Messvorrichtung 3 angeordnet, dass die gesamte Breite der Produktionspalette 2 im Zuge der Bewegung der Messvorrichtung 3 abbildbar ist. Die Anzahl an Lasertriangulationseinheiten 8 und Kameras 9 ist jedoch im Allgemeinen beliebig.

Ein Encoder 20 steht in datensignalleitender Verbindung, wobei im Allgemeinen unerheblich ist, ob die Datenverbindung zur Messvorrichtung 3 funksignalübertragend oder kabelgebunden ausgestaltet ist. Über den Encoder 20 kann bei einer Anbindung an die Produktionspalette 2 ohne Schlupf für die Messvorrichtung 3 eine präzise Information zur x-Koordinate (in Längsrichtung auf die Produktionspalette 2) generiert werden, welcher der Messvorrichtung 3 eingespeist wird, um mit den Informationen zur y-Koordinate (in Breitenrichtung auf die Produktionspalette 2) auf die Höhen relativ zu der Produktionspalette 2 schließen zu können.

Die Messvorrichtung 3 ist dazu programmiert, Tiefenbilder mit Bezug auf eine orthogonale Richtung 4 relativ zu einer durch die Produktionspalette 2 aufgespannten Ebene an zumindest zwei räumlich voneinander beabstandeten Positionen 6, 7 zu erstellen, wobei bevorzugt ein Kontinuum an Tiefenbildern über die Längserstreckung und Breite der Betonfertigbauteile 1 generiert wird, um das Tiefenbild aus einer Punktwolke an Messpunkten von Produktionshöhen 5 über die Breite des jeweiligen Betonfertigbauteiles 1 zusammenzusetzen. Die beiden mit einem Kreis indizierten Positionen 6, 7 in der Abbildung stellen lediglich mögliche Lokalisierungen an zu bestimmenden Produktionshöhen 5 (oder Beabstandungen 14) dar.

Grundsätzlich ist es hinreichend, lediglich die Produktionshöhe 5 als Dicke des Doppelwandelementes 11 zu bestimmen. Dies entspricht dem rechten Bezugszeichen 5 in der Darstellung. Es ist jedoch auch möglich, die Unterschale vor dem Einwenden der Oberschale zu analysieren, wobei die Produktionshöhe 5 der Lage des Doppelwandelementes 11 - indiziert mit dem linken Bezugszeichen 5 - und/oder die Produktionshöhe 5 der Unterschale zusammen mit der Bewehrung 12 - indiziert mit dem mittigen Bezugszeichen 5 - erfasst und verarbeitet wird. Es ist möglich, die Beabstandung 14 der Ober- und Unterschale aus den gewonnenen Informationen abzuleiten.

In dieser Ausführungsform wird ein 8-Bit-Tiefenbild erstellt, welches via 3D-Stereo-Vision oder Structured Light abgeleitet wird. Die Messmethode zur Erfassung der Produktionshöhe 5 des Betonfertigbauteiles 1 ist im Allgemeinen jedoch beliebig.

Die Produktionsanlage 19 umfasst eine Recheneinheit 18, welche dazu implementiert ist, die Produktionshöhe 5 der Produktionspalette 2 angeordneten Betonfertigbauteile 1 in Abhängigkeit der Tiefenbilder am jeweiligen Ort des Betonfertigbauteiles 1 zu bestimmen, um beispielsweise eine Ebenheit des Betonfertigbauteiles 1 zumindest bereichsweise über das Betonfertigbauteil 1 hinweg oder eine Distanzierung der beiden Betonfertigbauteiles 1 des Doppelwandelementes 11 zumindest bereichsweise über das Doppelwandelement 11 hinweg analysieren zu können.

In der Darstellung sind unterschiedliche Produktionshöhen 5 ersichtlich. Die Produktionshöhen 5 am linken Betonfertigbauteil 1 der Darstellung verdeutlicht, dass die Produktionshöhe 5 der Unterschale des Doppelwandelementes 11 vor dem Einwenden der Oberschale erfasst und analysiert werden kann - gegebenenfalls mit vorhandenem Überstand durch die Bewehrung 12. Die Produktionshöhe 5 am rechten Betonfertigbauteil 1 der Darstellung stellt die Produktionshöhe 5 am Endprodukt dar, welche gegebenenfalls lokal noch nachzubessern ist. Über diese Produktionshöhe 5 kann auf eine Beabstandung 14 zwischen der Oberschale und Unterschale rückgeschlossen werden. Grundsätzlich ist es hinreichend, lediglich die Produktionshöhe 5 am Doppelwandelement 11 beziehungsweise des Betonfertigbauteiles 1 als Endprodukt zu erfassen.

Ein exemplarisches rechnergestütztes Verfahren zur Vermessung eines Betonfertigbauteiles 1 für die Bauindustrie kann wie folgt expliziert werden: Das Betonfertigbauteil 1 wird auf der Produktionspalette 2 angeordnet, anschließend wird die Messvorrichtung 3 relativ zu der Produktionspalette 2 über ein Portal oder einen Kragarm zum Scannen des Betonfertigbauteiles 1 bewegt, sodass durch die Messvorrichtung 3 eine Vielzahl an Tiefenbilder in orthogonaler Richtung 4 auf die Produktionspalette 2 erstellt werden, welche zu einem Gesamttiefenbild des Betonfertigbauteiles 1 zusammengesetzt werden, um auf eine Produktionshöhe 5 des Betonfertigbauteiles 1 orthogonal auf die Produktionspalette 2 durch eine Recheneinheit 18 an zumindest zwei räumlich voneinander beabstandeten Positionen 6, 7 des Betonfertigbauteiles 1 rückschließen zu können.

Durch die Tiefenbilder kann im Allgemeinen - ungeachtet eines etwaig auf der Produktionspalette 2 angeordneten Betonfertigbauteiles 1 - die Geometrie der Produktionspalette 2 analysiert werden, um über die Produktionspalettenhöhen zumindest bereichsweise über die Produktionspalette 2 hinweg auf Abnützungen oder Verunreinigungen schließen zu können.

Die über die Messvorrichtung 3 - insbesondere über Lasertriangulation der Lasertriangulationseinheiten 8 in Verbindung mit den zugehörigen (FGPA-)Kameras 9 - ermittelten Tiefenbilder werden anschließend mittels einer Software analysiert.

Die Software zur Analyse der Tiefenbilder ist im Allgemeinen unabhängig von dem Erfassungsprinzip der Tiefenbilder. Im gezeigten Ausführungsbeispiel werden die über die Messvorrichtung 3 aufgenommenen Tiefenbilder über zumindest einen Produktionsparameter, wie einem Schalungsparameter, verarbeitet und analysiert.

Eine Bilddatenverarbeitungslogik 15 nutzt für die Tiefenbilder einen Algorithmus, welcher anhand des Produktionsparameters eine Rekonstruktion der Tiefenbilder über morphologische Transformationen oder Bandpassfilterung zur Aufbereitung durchführt.

Über einen Algorithmus zur Korrekturerkennung 16 Betonfertigbauteiles 1 wird eine Abweichung der tatsächlich vorliegenden Produktionshöhe 5 des Betonfertigbauteiles 1 oder der tatsächlich vorhandenen Beabstandung 14 zweier Betonfertigbauteile 1 als Produktionshöhe 5 zu einem Sollwert auf Basis des zugeführten Produktionsparameters bestimmt, wobei durch den Algorithmus eine Korrekturempfehlung 17 zur Nachbearbeitung des Betonfertigbauteils 1 in Abhängigkeit der bestimmten Abweichung erstellt und an einer Anzeigevorrichtung für einen Bediener der Produktionsanlage 19 visualisiert wird.

Die Bilddatenverarbeitungslogik 15, die Korrekturerkennung 16 und die Korrekturempfehlung 17 sind bevorzugt als Applikationen programmiert, welche beispielsweise auf einer integralen Maschinensteuerung der Produktionsanlage 19 mit einem Interface oder einer remote Steuerungs- und/oder Regelungseinrichtung für die Produktionsanlage 19 vorliegen können.

Die Applikationen können über ein Datenträgersignal transferiert werden, welche ein Computerprogrammprodukt umfassen, welches Befehle aufweist, die bei einer Ausführung durch die Recheneinheit 18 die Recheneinheit 18 veranlassen, durch die Messvorrichtung 3 die Tiefenbilder zu erstellen und Produktionshöhen 5 von Betonfertigbauteilen 1 oder Beabstandungen 14 - im Allgemeinen zwischen einer Oberkante der Unterschale und einer Unterkante der Oberschale oder einer Unterkante der Unterschale und einer Oberkante der Oberschale - von Betonfertigbauteile 1 über die Tiefenbilder zu bestimmen.

Die Zuführung des Produktionsparameters zur Bearbeitung der Tiefenbilder oder Erfassung und Abgleich der Produktionshöhen 5 beziehungsweise Beabstandungen 14 ist nicht zwingend erforderlich, jedoch bevorzugt, um besonders günstig die Tiefenbilder zu rekonstruieren, Abweichungen zu Sollwerten zu bestimmen oder eine Korrekturempfehlung 17 zur Nachbearbeitung der Betonfertigbauteile 1 zu erstellen.

Fig. 2 zeigt eine Wendevorrichtung 13 zum Einwenden eines ersten Betonfertigbauteils 1 in ein zweites Betonfertigbauteil 1 zur Bildung eines Doppelwandelementes 11.

Beispielsweise kann das zweite Betonfertigbauteil 1, in welches das dargestellte erste Betonfertigbauteil 1 eingewendet werden soll, vor der Verbindung bereits über die Messvorrichtung 3 auf die vorliegende Geometrie hin analysiert werden. Auch ist möglich, das erste Betonfertigbauteil 1 vor der Verbindung mit dem zweiten Betonfertigbauteil 1 über die Messvorrichtung 3 zu analysieren. Nachdem das Doppelwandelement 11 gebildet wurde, können über die Messvorrichtung 3 die einzelnen Betonfertigbauteile 1 oder das Doppelwandelementes 11 als solches auf die vorliegende Geometrie - wie die Beabstandungen 14 an unterschiedlichen Positionen 6, 7 - hin analysiert werden.

Die Messvorrichtung 3 gemäß Fig. 1 ist dazu ausgelegt, Produktionshöhen 5 des Betonfertigbauteiles 1 oder des Doppelwandelementes 11 zwischen 10 mm und 600 mm abzudecken.

Die Produktionspalette 2 kann als Referenzebene in der Analyse der Tiefenbilder dienen, welche im Zuge der Analyse der Tiefenbilder durch die Software identifiziert wird.

Werden die Tiefenbilder während eines Aushärtevorgangs von Beton der Betonfertigbauteile 1 erstellt und ausgewertet, so kann eine etwaig erforderliche Nachbearbeitung der Betonfertigbauteile 1 besonders einfach erwirkt werden, da das Material der Betonfertigbauteile 1 noch leichter zu bearbeiten ist.

Eine Abweichung von Abmaßen des jeweiligen Betonfertigbauteiles 1 zu Sollwerten über einen vordefinierten Schwellwert bedingt eine Ausgabe an den Bediener, um die nötigen Nachbearbeitungsschritte in Abhängigkeit der Korrekturempfehlung 17 - gegebenenfalls angeleitet durch die Applikation - einleiten zu können. Bevorzugt werden die Abmaße der Betonfertigbauteile 1 in sechs Freiheitsgraden auf Abweichungen zu Sollwerten bestimmt.

Die Wendevorrichtung 13 umfasst ein Portal zur Positionierung von Niederhalteelementen an variabel positionierbaren Randschalungen. Dieses Portal kann dazu genutzt werden, die Messvorrichtung 3 aufzunehmen. Ein Portal oder ein Kragarm alternativ oder in Ergänzung zu dem Portal für die Positionierung der Niederhalteelemente ist ebenfalls möglich.

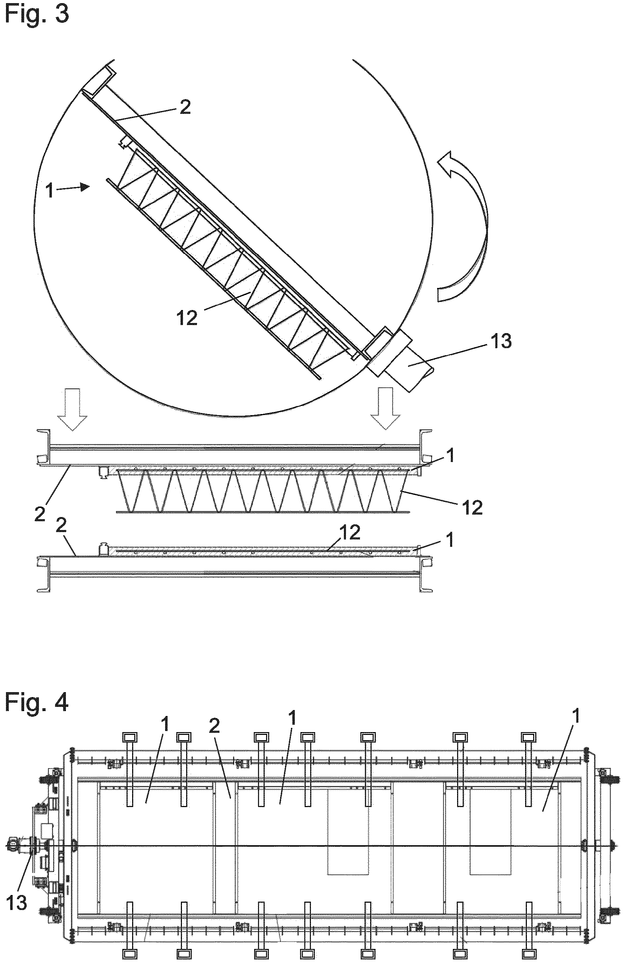

Fig. 3 zeigt eine Wendevorrichtung 13 für Doppelwandelemente 11, wobei im Unterschied zur Wendevorrichtung 13 mit einer Hubvorrichtung nach Fig. 2 ein Roboterarm zum Einwenden der Betonfertigbauteile 1 herangezogen wird.

Die Art der Bewehrung 12 ist im Allgemeinen beliebig und kann zum Beispiel in Form von Gitterträgern, Stäben, Bügeln oder Bewehrungsmatten vorliegen.

Fig. 4 zeigt eine Produktionspalette 2 mit drei darauf angeordneten Betonfertigbauteilen 1, wobei das linke Betonfertigbauteil 1 beispielsweise als Deckenelement und die beiden weiteren Betonfertigbauteile 1 als Wandelemente dienen können. Mit variabel positionierbaren Randschalungen können komplexe Geometrien aus Beton geschaffen werden, um beispielsweise Fenster oder Türen in die Form der Betonfertigbauteile 1 integrieren zu können.

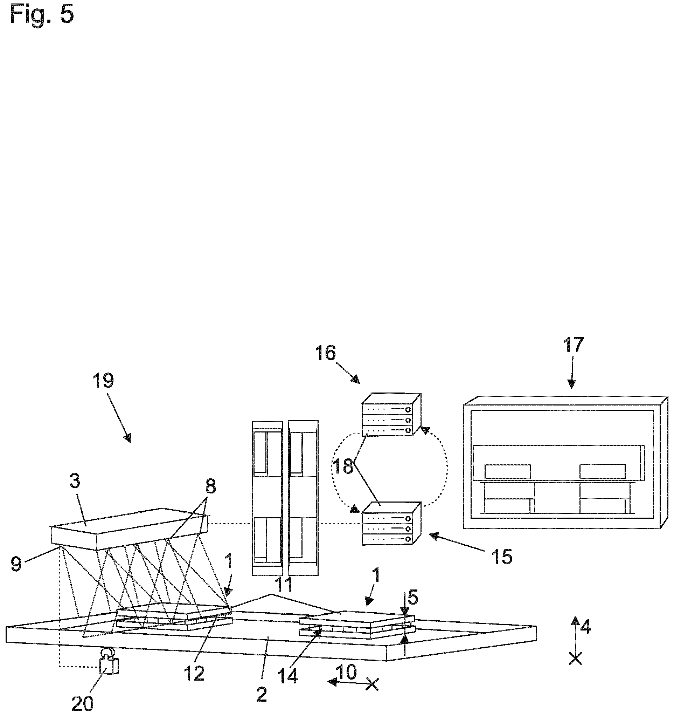

Fig. 5 zeigt eine Produktionsanlage 19 zur Durchführung des Verfahrens zur Vermessung von Betonfertigbauteilen 1, wobei ersichtlich ist, dass die Kameras 9 schräg auf die Schnittebene der Lasertriangulationseinheiten 8 orientiert sind.

Von dem Doppelwandelement 11 werden die Bilddaten aus der Messvorrichtung 3 einer Datenverarbeitungs-Einheit zugeführt, welche aus den Informationen Handlungsempfehlungen zur Korrektur und/oder Nachbearbeitung bestimmt, welche auf einer Anzeigevorrichtung visualisiert werden.

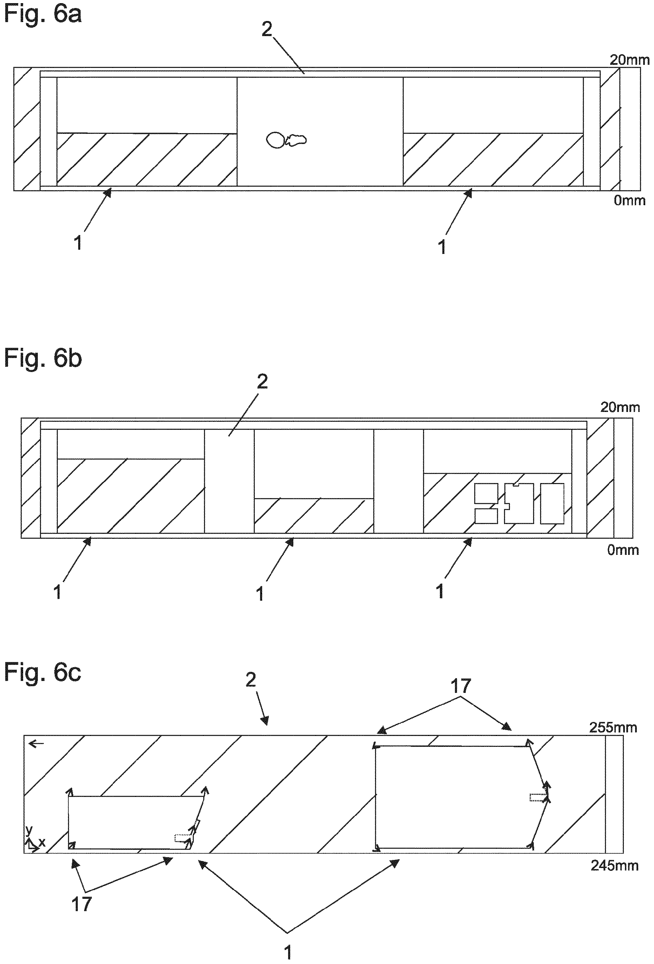

Fig. 6a zeigt Höheninformationen zu einer Produktionspalette 2, auf welcher 2 Betonfertigbauteile 1 angeordnet sind. Mittig auf der Produktionspalette 2 ist die Produktionspalette 2 mit Beton verunreinigt, wobei dieser Sachverhalt durch die Bildverarbeitungslogik erfasst wurde. In analoger Weise können Rückschlüsse auf den Abnutzungsgrad der Produktionspalette getroffen werden, welche sich auf die Geometrie des Betonfertigbauteiles 1 auswirken.

Über die ganzheitliche Erfassung der Produktionspaletten-Oberfläche besteht die Möglichkeit, eine Metrik zur Bewertung der Inhomogenität und/oder Qualität der Produktionspaletten-Oberfläche zu entwickeln, um die Produktionspalette 2 gegebenenfalls aus dem Produktionsprozess auszuschließen. Beispielsweise kann die Produktionspalettenhöhe aufgrund von Abnützungserscheinungen (oder Verunreinigungen) nicht konstant sein und bereichsweise tiefer oder höher liegen als im angrenzenden Bereich der Produktionsplatte 2. Dies kann einerseits für Nachbearbeitungen an dem Betonfertigbauteil 1 berücksichtigt werden und andererseits bei Unterschieden in den Produktionspalettenhöhe oberhalb eines Schwellwertes für eine Aussonderung der Produktionspalette 2 gesorgt werden. Als Referenzebene in Bezug auf die Produktionspalettenhöhe kann eine Ebene gewählt werden, welche einer durchschnittlichen oder überwiegend vorliegenden Produktionspalettenhöhe entspricht, um Abweichungen hiervon ermitteln zu können.

Fig. 6b zeigt Höheninformationen dreier Betonfertigbauteile 1 relativ zu der Produktionspalette 2 als Referenzebene. Ein Betonfertigbauteil weist Öffnungen - für Fenster - auf.

Fig. 6c zeigt eine aus den Tiefenbildern der Messvorrichtung 3 abgeleitete Handlungsempfehlung in Form einer Korrekturempfehlung 17 für zwei Betonfertigbauteile 1.

Es handelt sich um eine Heatmap/Colormap-Darstellung eines aus Oberflächenmessungen gefitteten Oberflächenmodells, auf welchem dem Bearbeiter graphisch eine Änderung eines gemessenen Höhenprofils - insbesondere verständlich und rasch erkennbar - visualisiert werden kann, um als Handlungsanweisung hinsichtlich Korrekturen dienen zu können.

Das jeweilige Betonfertigbauteil 1 kann entsprechend der indizierten Koordinatenverschiebungen zur Einstellung eines Sollzustandes des Betonfertigbauteiles 1 verschoben, verschwenkt oder dergleichen werden.

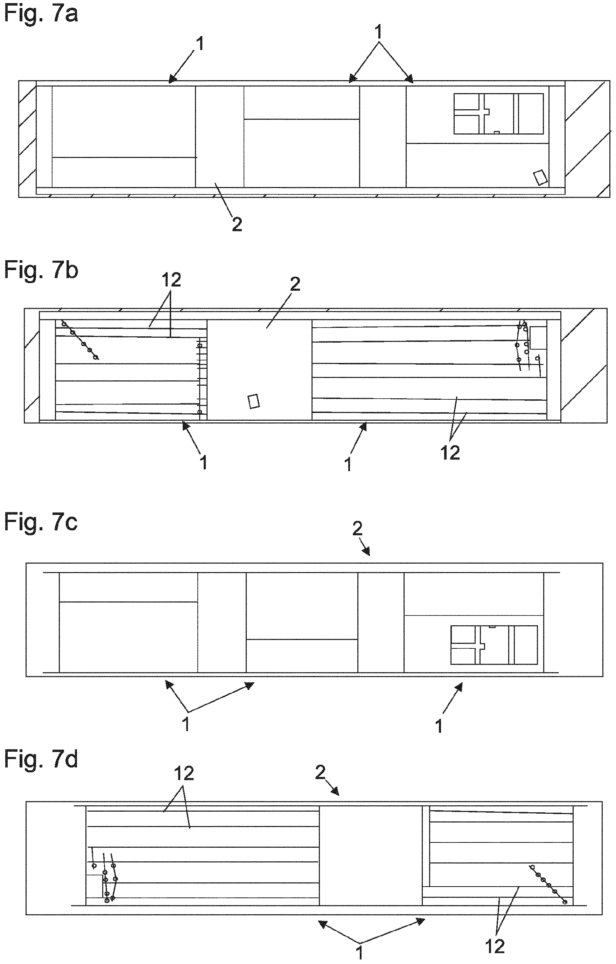

Fig. 7a zeigt ein aus der Messvorrichtung 3 erzeugtes Intensitätsbild der Produktionspalette 2 mit drei darauf angeordneten Betonfertigbauteilen 1, um gegebenenfalls etwaige Abweichungen zu Geometriesollwerten bestimmen zu können.

Fig. 7b zeigt eine Produktionspalette 2, auf welcher zwei Doppelwandteile in Form von Betonfertigbauteilen 1 für zwei Doppelwandelemente 11 als Betonfertigbauteile 1 angeordnet sind, in Form eines über die Messvorrichtung 3 erzeugtes Intensitätsbildes.

Durch die Analyse der Betonfertigbauteile 1 - insbesondere der aus den Unterschalen der Doppelwandelemente 11 herausragenden Bewehrungen 12 und/oder platzierten Abstandhalter - kann auf die Geometrie des Doppelwandelementes 11 als Endprodukt bereits vor dem Einwenden der Oberschale eingewirkt werden; beispielsweise, indem eine Bewehrung 12 relativ zu dem angrenzenden Beton verschoben oder geneigt wird.

Fig. 7c und Fig. 7d zeigen Datenverarbeitungszwischenschritte zwischen einer Übermittlung der Tiefenbilder von der Messvorrichtung 3 an die Recheneinheit 18 und der Ableitung von Korrekturempfehlungen 17 durch die Recheneinheit 18. Fig. 7c und Fig. 7d zeigen aus den Tiefenbildern der Messvorrichtung 3 generierte Gesamttiefenbilder der Produktionspalette 2 mit den darauf angeordneten Betonfertigbauteilen 1. Die Tiefenbilder sind über die Messvorrichtung 3 erzeugt.

Die Intensitätsbilder gemäß Fig. 7a und Fig. 7b sowie die Tiefenbilder/Gesamttiefenbilder gemäß Fig. 7c und Fig. 7d werden durch die Messvorrichtung 3 erzeugt und liegen in unverarbeiteter beziehungsweise ungefitteter Form vor. Diese können als Input-Daten für die Bildauswertungslogik genutzt werden.

## Patentansprüche

1. Computergestütztes Verfahren zur Vermessung einer Produktionspalette (2) für Betonfertigbauteile (1) für die Bauindustrie und/oder wenigstens einer auf der Produktionspalette angeordneten Komponente, vorzugsweise wenigstens eines Betonfertigbauteiles (1), bevorzugt Wandelement oder Deckenelement, **gekennzeichnet durch** die folgenden Verfahrensschritte:
- die Produktionspalette (2) wird relativ zu wenigstens einer Messvorrichtung (3), vorzugsweise über ein Portal oder einen Kragarm, zum Scannen der Produktionspalette (2) bewegt,
- durch die wenigstens eine Messvorrichtung (3) wird wenigstens ein Tiefenbild in orthogonaler Richtung (4) auf die Produktionspalette (2) erstellt,
- eine Produktionspalettenhöhe und/oder eine Produktionshöhe (5) wenigstens einer auf der Produktionspalette (2) angeordneten Komponente orthogonal auf die Produktionspalette (2) wird durch eine Recheneinheit (18) über das wenigstens eine Tiefenbild an zumindest zwei räumlich voneinander beabstandeten Positionen (6, 7) der Produktionspalette (2) bestimmt.

2. Verfahren nach Anspruch 1, wobei das wenigstens eine Tiefenbild über Lasertriangulation wenigstens einer Lasertriangulationseinheit (8) der wenigstens einen Messvorrichtung (3) ermittelt wird, wobei das wenigstens eine Tiefenbild durch wenigstens eine Kamera (9), vorzugsweise FGPA-Kamera, der wenigstens einen Messvorrichtung (3) erfasst wird.

3. Verfahren nach Anspruch 1 oder 2, wobei eine Vielzahl an Lasertriangulationseinheiten (8) und/oder Kameras (9) in Reihe orthogonal zu der Bewegungsrichtung (10) der wenigstens einen Messvorrichtung (3) an der wenigstens einen Messvorrichtung (3) angeordnet ist.

4. Verfahren nach einem der vorangehenden Ansprüche, wobei die wenigstens eine Messvorrichtung (3) dazu ausgelegt ist, Produktionshöhen (5) des wenigstens einen Betonfertigbauteiles (1) zwischen 10 mm und 600 mm zu bestimmen, wobei die Produktionshöhe (5) des wenigstens einen Betonfertigbauteiles (1) zwischen 10 mm und 600 mm bestimmt wird.

5. Verfahren nach einem der vorangehenden Ansprüche, wobei zumindest zwei Betonfertigbauteile (1) zu einem Doppelwandelement (11), vorzugsweise mit wenigstens einer zwischen den zumindest zwei Betonfertigbauteilen (1) angeordneten Bewehrung (12) und/oder über eine Wendevorrichtung (13) zum Einwenden, verbunden werden.

6. Verfahren nach Anspruch 5, wobei eine Beabstandung (14) der beiden Betonfertigbauteile zueinander als Produktionshöhe (5) an zumindest zwei voneinander räumlich beabstandeten Positionen (6, 7) des Doppelwandelementes (11) bestimmt wird.

7. Verfahren nach einem der vorangehenden Ansprüche, wobei das wenigstens eine Tiefenbild, vorzugsweise mit der Produktionspalette (2) als Referenzebene, während eines Aushärtevorgangs von Beton des wenigstens einen Betonfertigbauteiles (1) erstellt und ausgewertet wird.

8. Verfahren nach einem der vorangehenden Ansprüche, wobei das wenigstens eine Tiefenbild als 8-Bit-Tiefenbild erstellt
und/oder aus einer Punktwolke, vorzugsweise erzeugt mittels 3D-Stereo-Vision oder Structured Light, abgeleitet wird.

9. Verfahren nach einem der vorangehenden Ansprüche, wobei das wenigstens eine Tiefenbild und wenigstens ein Produktionsparameter, vorzugsweise Schalungsparameter, einer Bilddatenverarbeitungslogik (15) zugeführt werden, wobei das wenigstens eine Tiefenbild durch einen Algorithmus über den wenigstens einen Produktionsparameter rekonstruiert wird, wobei vorzugsweise vorgesehen ist, dass das wenigstens eine Tiefenbild mittels morphologischer Transformation und/oder Bandpassfilterung aufbereitet wird.

10. Verfahren nach einem der vorangehenden Ansprüche, wobei über einen Algorithmus zur Korrekturerkennung (16) des wenigstens einen Betonfertigbauteiles (1) eine Abweichung der Produktionshöhe (5) des wenigstens einen Betonfertigbauteiles (1) und/oder einer gegebenenfalls vorhandenen Beabstandung (14) zweier Betonfertigbauteile (1) zu einem Sollwert, vorzugsweise auf Basis des wenigstens einen gegebenenfalls zugeführten Produktionsparameter, bestimmt wird, wobei durch den Algorithmus eine Korrekturempfehlung (17) zur Nachbearbeitung des wenigstens einen Betonfertigbauteils (1) in Abhängigkeit der bestimmten Abweichung erstellt wird.

11. Verfahren nach Anspruch 10, wobei eine Abweichung von Abmaßen des wenigstens einen Betonfertigbauteiles (1) zu Sollwerten in zumindest drei Freiheitsgraden, vorzugsweise sechs Freiheitsgraden, bestimmt wird.

12. Verfahren nach Anspruch 10, wobei das wenigstens eine Betonfertigbauteil (1) in Abhängigkeit der Korrekturempfehlung (17) nachbearbeitet wird.

13. Computerprogrammprodukt umfassend Befehle, die bei einer Ausführung durch eine Recheneinheit (18) diese veranlassen, durch wenigstens eine Messvorrichtung (3) wenigstens eine Tiefenbild in orthogonaler Richtung (4) auf eine Produktionspalette (1) zu erstellen und eine Produktionspalettenhöhe und/oder eine Produktionshöhe (5) wenigstens einer auf der Produktionspalette (2) angeordneten Komponente, vorzugsweise Betonfertigbauteil (1), orthogonal auf die Produktionspalette (2) über das wenigstens eine Tiefenbild zu bestimmen.

14. Computerprogrammprodukt nach Anspruch 13, wobei in Abhängigkeit wenigstens eines dem Computerprogrammprodukt zugeführtem Produktionsparameter
- das wenigstens eine Tiefenbild rekonstruiert wird und/oder
- eine Abweichung der Produktionshöhe (5) zu einem Sollwert bestimmt wird und/oder
- eine Korrekturempfehlung (17) zur Nachbearbeitung des wenigstens einen Betonfertigbauteiles (1) erstellt wird.

15. Produktionsanlage (19) umfassend eine Produktionspalette (2) zur Herstellung wenigstens eines Betonfertigbauteiles (1) für die Bauindustrie und wenigstens eine Messvorrichtung (3), wobei die Produktionspalette (2) relativ zu der wenigstens einen Messvorrichtung (3) zum Scannen der Produktionspalette (2) und/oder wenigstens einer auf der Produktionspalette (2) angeordneten Komponente, vorzugsweise Betonfertigbauteil (1), bewegbar ist, **dadurch gekennzeichnet, dass** die wenigstens eine Messvorrichtung (3) dazu ausgebildet ist, wenigstens ein Tiefenbild der Produktionspalette (2) und/oder wenigstens einer auf der Produktionspalette (2) angeordneten Komponente, vorzugsweise Betonfertigbauteil (1), in orthogonaler Richtung (4) auf die Produktionspalette (2) an zumindest zwei räumlich voneinander beabstandeten Positionen (6, 7) zu erstellen und die Produktionsanlage (19) eine Recheneinheit (18) umfasst, welche dazu eingerichtet ist, eine Produktionspalettenhöhe und/oder eine Produktionshöhe (5) wenigstens einer auf der Produktionspalette (2) angeordneten Komponente, vorzugsweise Betonfertigbauteil (1), in Abhängigkeit des wenigstens einen Tiefenbildes zu bestimmen.
